# EUROPÄISCHE PATENTANMELDUNG

(11) **EP 0 887 012 A1**
(43) Veröffentlichungstag der Anmeldung: **30.12.1998**
(21) Anmeldenummer: 98111311.1
(22) Anmeldetag: 19.06.1998
(51) Int. Cl.: A01F 15/07

(54) **Vorrichtung zum kontinuierlichen und luftdichten Umhüllen von Körpern**

(30) Priorität: 27.06.1997 DE 29711213 U
(71) Anmelder: Maschinenfabriken Bernard Krone GmbH, D-48480 Spelle (DE)
(72) Erfinder: Krone, Bernard, 48480 Spelle (DE); Ahler, Wilhelm, 48703 Stadtlohn (DE)

(57) **Zusammenfassung**

Vorrichtung zum kontinuierlichen und luftdichten Umhüllen von Körpern, insbesondere von Erntegutballen (2) aus Heu, Stroh oder angewelktem Grüngut mit einer dehnbaren und selbstanhaftenden Folie, wobei der Umhüllungsvorgang ein Abrollen eines Folienstreifens von einer Vorratsrolle sowie ein vollständiges Umhüllen der Oberfläche eines Erntegutballens (2) einschließt, mit einem um eine horizontal und quer zur Fahrtrichtung (F) gerichtete Achse (3) schwenkbar angebrachten Wickeltisch (5), der von Mitteln zur Erzeugung einer Drehbewegung des aufgenommenen Erntegutballens (2) um eine in etwa horizontale Rotationsachse gebildet ist und dem eine Ablagevorrichtung zur Ablage des Erntegutballens (2) auf dem Erdboden nachgeordnet ist, wobei die am Wickeltisch (5) gehalterte Ablagevorrichtung (8) durch die Schwenkbewegung des Wickeltisches (5) beim Ablegevorgang eines vollständig umhüllten Erntegutballens (2) selbsttätig aus einer angehobenen, eine ausreichende Bodenfreiheit aufweisenden Stellung in eine bodennahe, in etwa parallel zum Erdboden ausgerichtete Ablagestellung und zurück überführbar ausgebildet ist.

## Beschreibung

Die Erfindung bezieht sich auf eine Vorrichtung zum kontinuierlichen und luftdichten Umhüllen von Körpern, insbesondere von Erntegutballen aus Heu, Stroh oder angewelktem Grüngut mit einer dehnbaren und selbstanhaftenden Folie nach dem Oberbegriff des Anspruches 1. Derartige Vorrichtungen oder Geräte sind in vielfältigen Ausführungsformen bekannt. Zur Ablage eines vollständig umhüllten Erntegutballens sind diesen Vorrichtungen Mittel zugeordnet, durch die Beschädigungen der Folie bei der Ablage bzw. beim Abwurf des Erntegutballen vom Wickeltisch auf den Erdboden beispielsweise durch Stoppeln oder Steine vermieden werden.

Bei einem, in einem Prospekt der Fa. Kverneland Underhaug AS mit dem Druckvermerk UN 121585 6.96 Bryne Offset dargestellten Rundballenwickler ist zur Ablage des Erntegutballens ein hydraulischer Falldämpfer vorgesehen, der schwenkbar am Rahmen des Rundballenwicklers angebracht ist und der den vom hochgeschwenkten Wickeltisch abrollenden Erntegutballen aufnimmt und auf dem Erdboden ablegt. Da die zu umhüllenden Erntegutballen ein großes Gewicht haben können, ergibt sich eine schwere und somit auch teuere konstruktive Ausbildung derartiger Falldämpfer. Außerdem ist bei dem vorstehend beschriebenen Rundballenwickler bei der Ballenablage Bedienungsaufwand durch den Benutzer erforderlich, d.h. eine selbsttätige Ballenablage ist hier nicht möglich.

Eine weitere Ausführungsform geht aus einem Prospekt der Fa. Maschinenbau und Landtechnik GmbH Zwickau mit dem Druckvermerk L.A.4/96.K3000 hervor. Dabei ist zur Ablage eines vollständig umhüllten Erntegutballens ein Gummituch vorgesehen, welches im hinteren Bereich des Wicklers angebracht ist und beim Einsatz über den Erdboden schleift. Beim Abwurf vom Wickeltisch fällt der Erntegutballen auf dieses Gummituch, so daß dadurch Beschädigungen durch Stoppeln oder Steine vermieden werden. Ein Nachteil dieses Wicklers ist in dem erhöhten Verschleiß des Gummituches zu sehen. Weiterhin ist vor und nach jeder Straßenfahrt ein erhöhter Arbeitaufwand erforderlich, um das Gummituch so zu verpacken, bzw. wieder auszupacken, daß während der Straßenfahrt ein Schleifen des Gummituches auf der Fahrbahn vermieden wird.

Aufgabe der Erfindung ist es, eine Vorrichtung zum kontinuierlichen und luftdichten Umhüllen von Körpern, insbesondere von Erntegutballen zu schaffen, bei der mittels einer konstruktiv einfachen und kostengünstig herstellbaren Ablagevorrichtung eine schonende Ablage eines vollständig umhüllten Erntegutballens auf dem Erdboden erreichbar ist. Die Ablagevorrichtung soll dabei so ausgebildet sein, daß zur Betätigung keinerlei Bedienungsaufwand durch eine Bedienperson notwendig ist und daß ein Verschleiß der Ablagevorrichtung durch das Schleifen auf dem Erdboden ausgeschlossen ist.

Zur Lösung der gestellten Aufgabe zeichnet sich die Vorrichtung der vorstehend genannten Art durch die im kennzeichnenden Teil des Anspruches 1 angegebenen Merkmale aus. Hinsichtlich der weiteren Ausgestaltung der Erfindung wird auf die Ansprüche 2 bis 12 verwiesen.

Bei einer gattungsgemäßen Vorrichtung zum kontinuierlichen und luftdichten Umhüllen von Körpern, insbesondere von Erntegutballen aus Heu, Stroh oder angewelktem Grüngut mit einer dehnbaren und selbstanhaftenden Folie ist es nach der Erfindung vorgesehen, einem um eine horizontal und quer zur Fahrtrichtung ausgerichtete Achse schwenkbar angebrachten Wickeltisch eine Ablagevorrichtung zur schonenden Ablage vollständig umhüllter Erntegutballen zu zuordnen, welche selbsttätig durch die Schwenkbewegung des Wickeltisches aus einer angehobenen Stellung in eine bodennahe, in etwa parallel zum Erdboden ausgerichtete Ablagestellung und zurück überführbar ist. Die angehobene Stellung der Ablagevorrichtung (Transportstellung) ist einerseits durch eine ausreichende Bodenfreiheit vorgegeben und andererseits nach oben durch die in einer Drehbewegung um der Erntegutballen rotierende Vorratsrolle begrenzt. In der bodennahen Ablagestellung ist es möglich, daß ein Erntegutballen von dem in eine Schrägstellung verschwenkten Wickeltisch herunterrollt und dabei auf die eine schützende Unterlage bildende und federnd nachgiebig angelenkte Ablagevorrichtung fällt, die durch das Gewicht des Erntegutballens auf den Erdboden gedrückt wird. Dadurch wird ein vollständig mit einer Folie umhüllter Erntegutballen beim Auftreffen auf den Erdboden vor Beschädigung durch Stoppeln oder Steine geschützt. Durch das beim Abrollvorgang vom Wickeltisch hervorgerufene Schwungmoment rollt der Erntegutballen nun von der Ablagevorrichtung herunter und bleibt hinter dieser unbeschädigt liegen.

Gemäß der Erfindung erfolgt die Betätigung der Ablagevorrichtung über Koppelgetriebe, wobei der Wickeltisch als antreibender Lenker der viergliedrigen Koppelgetriebe ausgebildet ist. Zwei weitere an einem Tragrahmen der Vorrichtung zum Umhüllen von Erntegutballen angelenkte Lenker sowie zwei Verbindungslenker bilden zusammen mit dem ebenfalls schwenkbar am Tragrahmen angebrachten Wickeltisch die Koppelgetriebe, mit denen die Ablagevorrichtung selbsttätig aus der angehobenen Stellung in die Ablagestellung und zurück überführt werden kann. Die Verbindungslenker sind dabei so ausgebildet, daß unterhalb der Koppelpunkte, in denen die Verbindungslenker mit dem Wickeltisch und mit dem am Tragrahmen angelenkten Lenkern verbunden sind, ein Anlenkpunkt zur schwenkbeweglichen Aufnahme der Ablagevorrichtung vorgesehen ist. Um eine nachgiebige Aufhängung der Ablagevorrichtung zu erreichen, sind Zugfedern vorgesehen, welche sich zwischen Tragarmen der Ablagevorrichtung und den überstehenden Enden der am Tragrahmen angelenkten Lenker erstrecken.

Eine einfache und für den rauhen landwirtschaftlichen Einsatz geeignete Ausgestaltung der Erfindung geht davon aus, die Ablagevorrichtung aus begrenzt beweglichen und quer zur Fahrtrichtung aneinander gereihten Streifenelementen herzustellen, welche in einem geringen Abstand zueinander an einer ebenfalls begrenzt beweglichen Querschiene gehaltert sind. Vorzugsweise bestehen diese Streifenelemente aus Gummi oder einem ähnlichen federnden Material und bilden somit eine Unterlage, durch die ein von einem schräggestellten Wickeltisch abrollender Erntegutballen beim Auftreffen auf den Erdboden wirksam gegen Beschädigung durch Steine oder Stoppeln geschützt ist.

Nach einem weiteren vorteilhaften Aspekt der Erfindung ergibt sich durch die gewählte Ausbildung der Koppelgetriebe, daß die Ausladung der Ablagevorrichtung in eine der Fahrtrichtung entgegengesetzte Richtung sich bei der Überführung aus der angehobenen Stellung in die Ablagestellung vergrößert und umgekehrt bei der Überführung aus der Ablagestellung in die angehobene Stellung wieder verringert. Dadurch können die äußeren Abmessungen der Ablagevorrichtung klein gehalten werden.

Wie aus den vorstehenden Ausführungen hervorgeht, stellt die Ablagevorrichtung sowie deren Betätigung gemäß der Erfindung somit eine einfach und kostengünstig herstellbare Lösung dar, bei der keinerlei Bedienungsaufwand durch den Benutzer erforderlich ist. Weiterhin wird durch die Erfindung eine nahezu verschleißfreie Ablagevorrichtung zur Verfügung gestellt.

Eine detaillierte Beschreibung des Gegenstandes der Erfindung erfolgt nun anhand eines Ausführungsbeispieles. In den Zeichnungen stellen im einzelnen dar:
- Fig.1: eine Seitenansicht eines Ausführungsbeispieles einer erfindungsgemäßen Vorrichtung, die einer Rundballenpresse nachgeordnet ist;
- Fig.2: eine vergrößerte Darstellung der Einzelheit X in Fig.1, wobei sich der Wickeltisch der erfindungsgemäßen Vorrichtung in einer Wickelstellung befindet;
- Fig.3: eine vergrößerte Darstellung der Einzelheit X in Fig.1 zu Beginn des Ablegevorganges eines vollständig umhüllten Erntegutballens;
- Fig.4: eine vergrößerte Darstellung der Einzelheit X in Fig.1 am Ende des Ablegevorganges eines vollständig umhüllten Erntegutballens;
- Fig.5: eine Seitenansicht eines Ausführungsbeispieles einer Ablagevorrichtung;
- Fig.6: eine Draufsicht der Ablagevorrichtung nach Fig.5;

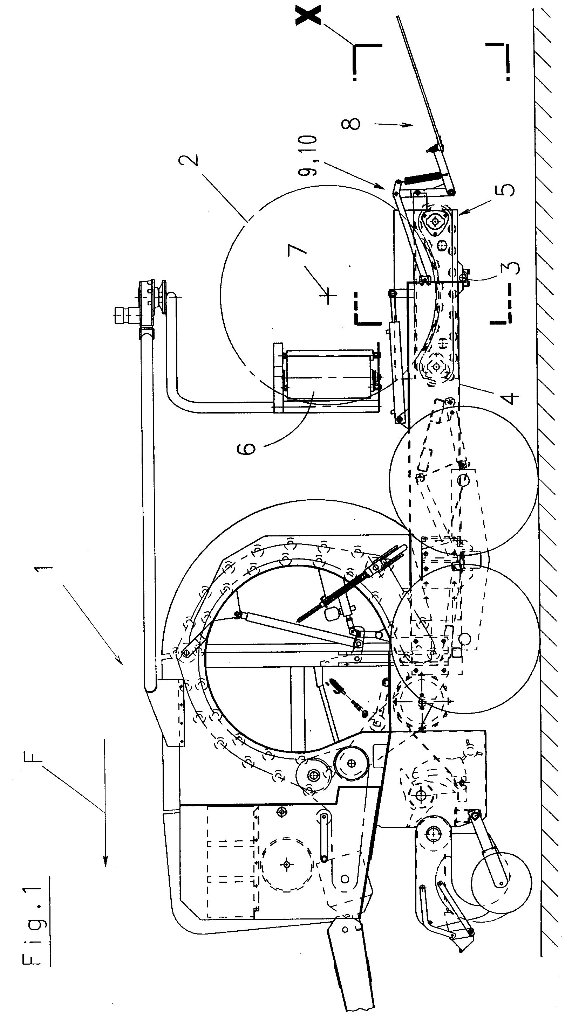

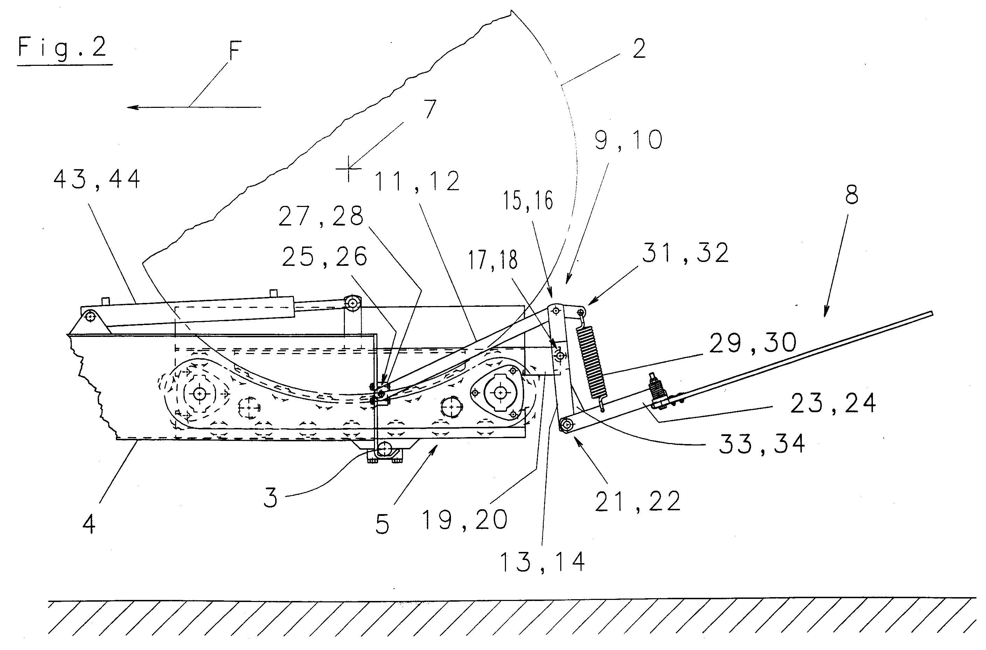

Bei der in Fig.1 dargestellten und einer Rundballenpresse 1 nachgeordneten Vorrichtung zum Umhüllen eines Erntegutballens 2 mit Folie handelt es sich um ein Ausführungsbeispiel mit einem um eine horizontal und quer zur Fahrtrichtung F ausgerichtete Achse 3 schwenkbar an einem Tragrahmen 4 angebrachten Wickeltisch 5 zur Aufnahme eines Erntegutballens 2, um den in einer Drehbewegung um eine vertikale Achse während des Umhüllungsvorganges eine Vorratsrolle 6 herum geführt wird, wobei ein Folienstreifen von der Vorratsrolle 6 abgezogen und um den sich um eine horizontale Rotationsachse 7 drehenden Erntegutballen 2 gewickelt wird. Zur Ablage eines vollständig umhüllten Erntegutballens 2 nach dem Umhüllungsvorgang ist dem Wickeltisch 5 eine Ablagevorrichtung 8 zugeordnet, deren Anlenkung am Wickeltisch 5, sowie deren konstruktive Ausbildung in den Figuren 2 bis 4 näher veranschaulicht ist.

Wie aus den Figuren 2 bis 4 hervorgeht, sind zur Anlenkung der Ablagevorrichtung 8 Koppelgetriebe 9,10 vorgesehen, welche an den in Fahrtrichtung F gerichteten Längsseiten des Wickeltisches 5 angeordnet sind. Zwei am Tragrahmen 4 angelenkte Lenker 11,12 sowie zwei Verbindungslenker 13,14 bilden in Verbindung mit dem Wickeltisch 5 die Koppelgetriebe 9,10, wobei der Wickeltisch 5 als antreibender Lenker der Koppelgetriebe 9,10 ausgeführt ist. Beispielsweise über eine Bolzenverbindung an den Koppelpunkten 15,16 sind die am Tragrahmen angelenkten Lenker 11,12 mit den Verbindungslenkern 13,14 verbunden, während die Verbindungslenker im Bereich der Koppelpunkte 17,18 schwenkbar an Halterungen 19,20 des Wickeltisches 5 angebracht sind. Unterhalb der Koppelpunkte 15,16,17,18 weisen die Verbindungslenker 13,14 Anlenkpunkte 21,22 auf, in denen Tragarme 23,24 der Ablagevorrichtung 8 über Bolzen oder dgl. Verbindungselemente schwenkbar an den Verbindungslenkern 13,14 gehaltert sind. Zur Anbringung der am Tragrahmen 4 angelenkten Lenker 11,12 in Anlenkpunkten 25,26 sind Lagerbolzen vorgesehen, deren Halterungen 27,28 über Schraubverbindungen am Tragrahmen 4 befestigt sind. Eine federnd nachgiebige Anlenkung der Ablagevorrichtung 8 gegenüber den Verbindungslenkern 13,14 der Koppelgetriebe 9,10 wird beispielweise über Zugfedern 29,30 erreicht, die sich zwischen den Tragarmen 23,24 und den überstehenden Enden 31,32 der am Tragrahmen 4 angelenkten Lenker 11,12 erstrecken. In der angehobenen Stellung (Fig.2) stützen sich die Tragarme 23,24 der Ablagevorrichtung 8 an Anschlägen 33,34 ab, welche mit den Verbindungslenkern 13,14 fest verbunden sind.

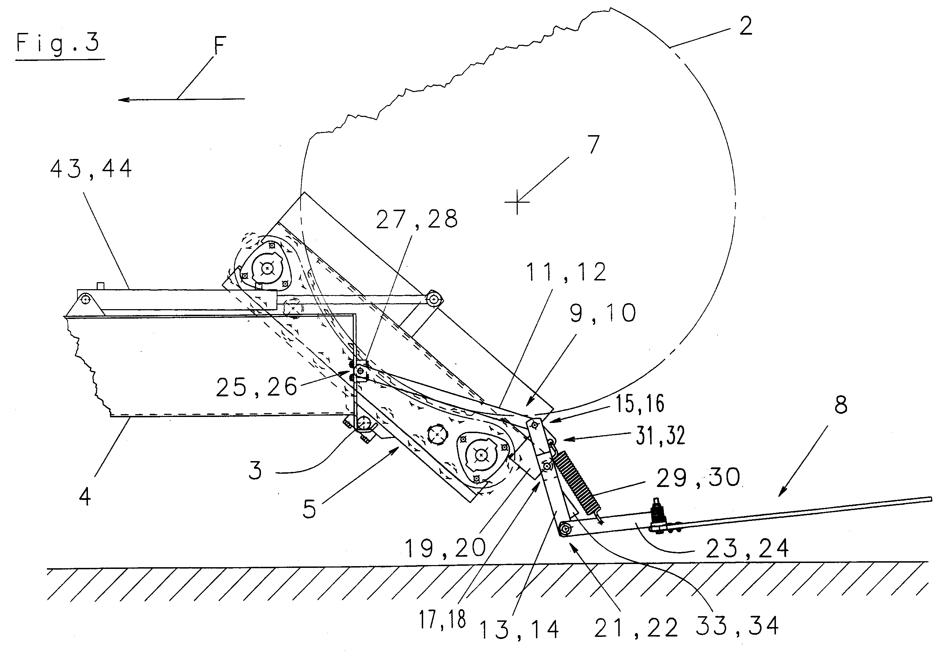

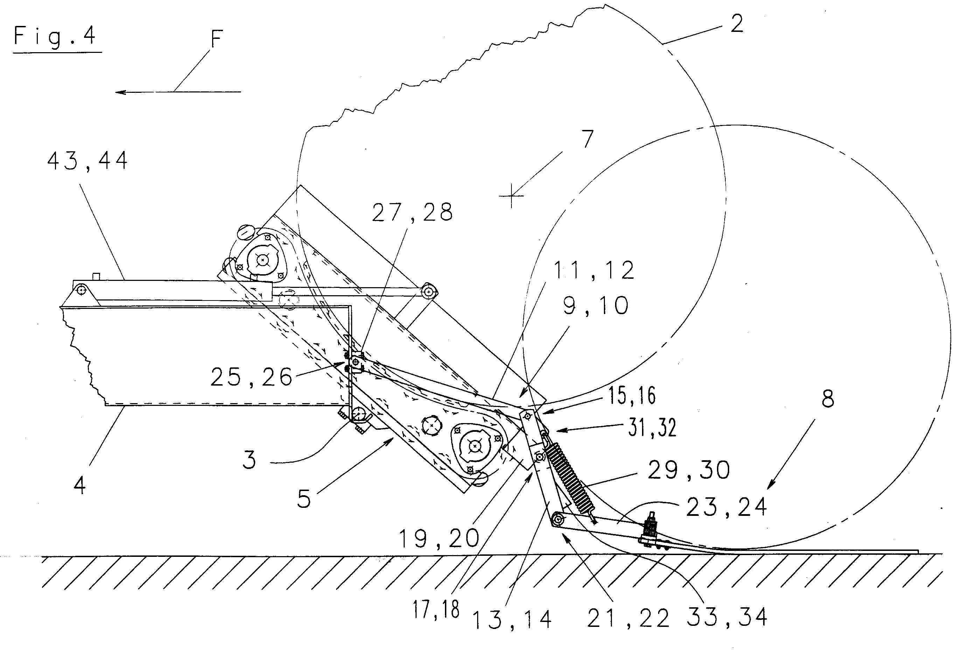

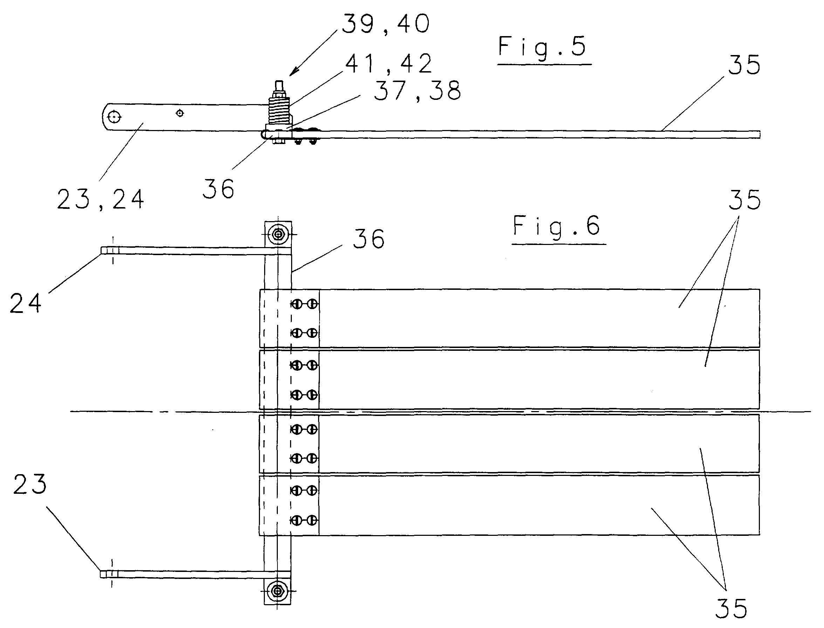

In den Figuren 5 und 6 ist eine vorteilhafte Ausführungsform einer Ablagevorrichtung 8 dargestellt. Im wesentlichen besteht die Ablagevorrichtung 8 dabei aus begrenzt beweglich ausgebildeten und beispielsweise aus Gummi oder einem ähnlichen federnden Material hergestellten Streifenelementen 35, die quer zur Fahrtrichtung F aneinander gereiht sind und in einem geringen seitlichen Abstand zueinander an einer ebenfalls begrenzt beweglichen Querschiene 36 befestigt sind. Um Beschädigungen der Ablagevorrichtung 8 zu vermeiden, erfolgt die Verbindung zwischen der Querschiene 36 und Haltelaschen 37,38 der Tragarme 23,24 über Schraubverbindungen 39,40, welche Druckfedern 41,42 enthalten. Zur Einleitung einer Schwenkbewegung des Wickeltisches 5 aus der Wickelstellung (Fig.2) in eine Schrägstellung gemäß Fig.3 und 4 und zurück sind beispielsweise hydraulisch ansteuerbare Kolben-Zylinder-Anordnungen 43,44 vorgesehen.

Der Funktionsablauf der erfindungsgemäßen Vorrichtung zum Umhüllen eines Erntegutballens stellt sich wie folgt dar:
Nach dem Umhüllungsvorgang eines Erntegutballens 2 mit Folie wird durch die Schwenkbewegung des Wickeltisches 5 aus der Wickelstellung (Fig.2) in eine Schrägstellung (Fig.3) die Ablagevorrichtung 8 aus einer angehobenen Stellung (Fig.2) in eine bodennahe, in etwa parallel zum Erdboden ausgerichtete Stellung (Fig.3) überführt, wobei die Ausladung der Ablagevorrichtung 8 in eine der Fahrtrichtung F entgegengesetzten Richtung vergrößert wird. In der Schrägstellung des Wickeltisches 5 rollt der vollständig umhüllte Erntegutballen 2 vom Wickeltisches 5 herunter und fällt dabei auf die eine schützende Unterlage bildende und federnd nachgiebig angelenkte Ablagevorrichtung 8, die dann durch das Gewicht des Erntegutballens 2 auf den Erdboden gedrückt wird. Dadurch wird der umhüllte Erntegutballen 2 beim Auftreffen auf den Erdboden gegen Beschädigungen durch Steine oder Stoppeln wirksam geschützt. Durch das beim Abrollvorgang des Erntegutballens 2 vom Wickeltisch 5 hervorgerufene Schwungmoment rollt dieser von der Ablagevorrichtung 8 herunter, so daß nachfolgend eine Überführung der Ablagevorrichtung 8 zurück in die angehobene Stellung (Fig.2) durchführbar ist, bei der dann auch die Ausladung der Ablagevorrichtung 8 in der der Fahrtrichtung F entgegengesetzten Richtung wieder verringert wird.

## Patentansprüche

1. Vorrichtung zum kontinuierlichen und luftdichten Umhüllen von Körpern, insbesondere von Erntegutballen (2) aus Heu, Stroh oder angewelktem Grüngut mit einer dehnbaren und selbstanhaftenden Folie, wobei der Umhüllungsvorgang ein Abrollen eines Folienstreifens von einer Vorratsrolle (6) sowie ein vollständiges Umhüllen der Oberfläche eines Erntegutballens (2) einschließt, mit einem um eine horizontal und quer zur Fahrtrichtung (F) gerichtete Achse (3) schwenkbar angebrachten Wickeltisch (5), der von Mitteln zur Erzeugung einer Drehbewegung des aufgenommenen Erntegutballens (2) um eine in etwa horizontale Rotationsachse gebildet ist und dem eine Ablagevorrichtung zur Ablage des Erntegutballens (2) auf dem Erdboden nachgeordnet ist, dadurch gekennzeichnet, daß die am Wickeltisch (5) gehalterte Ablagevorrichtung (8) durch die Schwenkbewegung des Wickeltisches (5) beim Ablegevorgang eines vollständig umhüllten Erntegutballens (2) selbsttätig aus einer angehobenen, eine ausreichende Bodenfreiheit aufweisenden Stellung (Fig. 2) in eine bodennahe, in etwa parallel zum Erdboden ausgerichtete Ablagestellung (Fig. 3) und zurück überführbar ausgebildet ist.

2. Vorrichtung zum kontinuierlichen und luftdichten Umhüllen von Körpern nach Anspruch 1, dadurch gekennzeichnet, daß sich die Ausladung der Ablagevorrichtung (8) in einer der Fahrtrichtung (F) entgegengesetzten Richtung bei der Überführung aus der angehobenen Stellung (Fig.2) in die Ablagestellung (Fig.3) vergrößert und umgekehrt bei der Überführung aus der Ablagestellung in die angehobene Stellung wieder verringert.

3. Vorrichtung zum kontinuierlichen und luftdichten Umhüllen von Körpern nach Anspruch 1 und 2, dadurch gekennzeichnet, daß die Überführung der Ablagevorrichtung (8) aus der angehobenen Stellung in die Ablagestellung und zurück über Koppelgetriebe (9,10) durchführbar ist.

4. Vorrichtung zum kontinuierlichen und luftdichten Umhüllen von Körpern nach einem der Ansprüche 1 bis 3, dadurch gekennzeichnet, daß der Wickeltisch (5) als antreibender Lenker der Koppelgetriebe (9,10) ausgebildet ist.

5. Vorrichtung zum kontinuierlichen und luftdichten Umhüllen von Körpern nach einem der Ansprüche 1 bis 4, dadurch gekennzeichnet, daß die Koppelgetriebe (9,10) weiterhin zwei an einem Tragrahmen (4) angelenkte Lenker (11,12) sowie zwei Verbindungslenker (13,14) umfassen.

6. Vorrichtung zum kontinuierlichen und luftdichten Umhüllen von Körpern nach einem der Ansprüche 1 bis 5, dadurch gekennzeichnet, daß die Verbindungslenker (13,14) unterhalb der Koppelpunkte (15,16) und (17,18) Anlenkpunkte (21,22) zur schwenkbeweglichen Aufnahme der Ablagevorrichtung (8) aufweisen.

7. Vorrichtung zum kontinuierlichen und luftdichten Umhüllen von Körpern nach einem der Ansprüche 1 bis 6, dadurch gekennzeichnet, daß die am Tragrahmen (4) angelenkten Lenker (11,12) sich über die Koppelpunkte (15,16) hinaus erstrecken und dort an den überstehenden Enden (31,32) einen weiteren Anlenkpunkt aufweisen.

8. Vorrichtung zum kontinuierlichen und luftdichten Umhüllen von Körpern nach einem der Ansprüche 1 bis 7, dadurch gekennzeichnet, daß die Ablagevorrichtung (8) nachgiebig mit den Verbindungslenkern (13,14) der Koppelgetriebe (9,10) verbunden ist.

9. Vorrichtung zum kontinuierlichen und luftdichten Umhüllen von Körpern nach einem der Ansprüche 1 bis 8, dadurch gekennzeichnet, daß zur nachgiebigen Anlenkung der Ablagevorrichtung (8) an den Verbindungslenkern (13,14) der Koppelgetriebe (9,10) Zugfedern (29,30) vorgesehen sind.

10. Vorrichtung zum kontinuierlichen und luftdichten Umhüllen von Körpern nach einem der Ansprüche 1 bis 9, dadurch gekennzeichnet, daß die Zugfedern (29,30) sich zwischen dem Anlenkpunkt an den überstehenden Enden (31,32) der am Tragrahmen (4) angelenkten Lenker (11,12) und Tragarmen (23,24) der Ablagevorrichtung (8) erstrecken.

11. Vorrichtung zum kontinuierlichen und luftdichten Umhüllen von Körpern nach einem der Ansprüche 1 bis 10, dadurch gekennzeichnet, daß die Ablagevorrichtung (8) aus begrenzt beweglichen und quer zur Fahrtrichtung (F) aneinander gereihten Streifenelementen (35) besteht, welche an einer ebenfalls begrenzt beweglich ausgeführten Querschiene (36) arretiert sind.

12. Vorrichtung zum kontinuierlichen und luftdichten Umhüllen von Körpern nach einem der Ansprüche 1 bis 11, dadurch gekennzeichnet, daß die Streifenelemente (35) aus Gummi oder einem ähnlichen federnden Material bestehen.
